(19) Europäisches Patentamt
European Patent Office
Office européen des brevets

(11) **EP 4 056 832 B1**

(12) **EUROPÄISCHE PATENTSCHRIFT**

(45) Veröffentlichungstag und Bekanntmachung des Hinweises auf die Patenterteilung:
**29.04.2026   Patentblatt 2026/18**

(21) Anmeldenummer: **22159341.1**

(22) Anmeldetag: **01.03.2022**

(51) Internationale Patentklassifikation (IPC):
**F02D 29/06** *(2006.01)*      **F02P 5/15** *(2006.01)*
**H02P 9/04** *(2006.01)*

(52) Gemeinsame Patentklassifikation (CPC):
**F02D 29/06; F02D 37/02; F02D 41/0002; F02D 41/021; F02D 41/062; F02P 5/00; H02J 3/44; H02P 9/04; H02P 9/42;** F02D 2250/22

(54) **VERFAHREN ZUM SYNCHRONISIEREN EINES GENERATORS MIT EINEM STROMVERSORGUNGSNETZ**

METHOD FOR SYNCHRONISING A GENERATOR WITH A POWER SUPPLY GRID

PROCÉDÉ DE SYNCHRONISATION D'UN GÉNÉRATEUR AVEC UN RÉSEAU D'ALIMENTATION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **08.03.2021   DE 102021105547**

(43) Veröffentlichungstag der Anmeldung:
**14.09.2022   Patentblatt 2022/37**

(73) Patentinhaber: **Innio Jenbacher GmbH & Co OG 6200 Jenbach (AT)**

(72) Erfinder:
• **ARNOLD, Georg**
  **6020 Innsbruck (AT)**
• **SCHMIDT, Simon**
  **6240 Rattenberg (AT)**
• **TRIENDL, Tobias**
  **6074 Rinn (AT)**
• **BIRGEL, Andreas**
  **6020 Innsbruck (AT)**

(74) Vertreter: **Torggler & Hofmann Patentanwälte - Innsbruck**
**Torggler & Hofmann Patentanwälte GmbH & Co KG**
**Wilhelm-Greil-Straße 16**
**6020 Innsbruck (AT)**

(56) Entgegenhaltungen:
EP-A1- 3 561 988        EP-B2- 2 433 355
WO-A1-2017/051156       US-A1- 2012 175 876

**Beschreibung**

Die vorliegende Erfindung betrifft ein Verfahren zum Synchronisieren eines Generators mit einem eine Netzfrequenz aufweisenden Stromversorgungsnetz mit den Merkmalen des Oberbegriffs des Anspruchs 1, einen Verbrennungsmotor zum Antreiben eines Generators, ein Computerprogrammprodukt zum Synchronisieren eines Generators mit einem eine Netzfrequenz aufweisenden Stromversorgungsnetz mit den Merkmalen des Oberbegriffs des Anspruchs 10, sowie ein computerlesbares Speichermedium mit einem solchen Computerprogrammprodukt.

Gattungsgemäße Verfahren zum Synchronisieren eines Generators mit einem eine Netzfrequenz aufweisenden Stromversorgungsnetz umfassen folgende Schritte:

- mechanisches Antreiben des Generators mittels eines Verbrennungsmotors, insbesondere eines Gasmotors unter Erzeugung einer Generatordrehzahl, die einer bei der vorliegenden Generatordrehzahl vom Generator erzeugten Generatorfrequenz entspricht,
- Regeln oder Steuern des Verbrennungsmotors so, dass die Generatorfrequenz in einem Toleranzbereich liegt, wobei die Netzfrequenz innerhalb des Toleranzbereiches liegt,
- Detektieren einer Phasenwinkeldifferenz zwischen einem vom Generator erzeugten Strom und/oder einer vom Generator erzeugten Spannung einerseits und einem Netzstrom und/oder einer Netzspannung andererseits,
- Synchronisieren der vom Generator erzeugten Spannung und/oder des vom Generator erzeugten Stroms einerseits mit der Netzspannung und/oder dem Netzstrom andererseits, indem die Phasenwinkeldifferenz verringert, insbesondere minimiert, wird,
- Elektrisches Verbinden des Generators mit dem Stromversorgungsnetz.

Um den Generator mit dem Stromnetz zu synchronisieren ist es bekannterweise notwendig, die Generatordrehzahl zunächst auf einen der Stromfrequenz entsprechenden Wert hochzufahren oder zu verringern und in Folge auch auf diesen entsprechend zu regeln, wobei die Phasenlage des Generators mit jener des Stromnetzes im Wesentlichen in Übereinstimmung zu bringen ist.

Dies geht beispielsweise aus der EP 2 651 000 A2 hervor, wobei beschrieben wird, dass nach dem Hochfahren der Generatordrehzahl abgewartet wird, bis der Phasenwinkel des Generators und des Stromversorgungsnetzes innerhalb gewisser Grenzen übereinstimmen und anschließend wird ein elektrisches Verbinden des Generators mit dem Stromversorgungsnetz vorgenommen. Dieses Verfahren geht mit einer relativ hohen Synchronisationszeit einher.

Die EP 3 561 988 A1 beschreibt ein Verfahren, mit welchem die Synchronisationszeit verringert werden kann, indem gezielt entweder die Brennstoffzufuhr oder die Zündung für bestimmte Zylindereinheiten ausgesetzt wird. Speziell im Fall von Gemisch-aufgeladenen Verbrennungsmotoren, bei welchen das Gemisch bereits vor der Zuvor in eine Zylindereinheit (und somit in den Brennraum) gebildet wird, geht das Aussetzen der Zündung bei Verwendung von beispielsweise Erdgas als Brennstoff mit hohen Methan-Emissionen einher, welche unverbrannt über die Auspuffanlage an die Atmosphäre ausgestoßen werden.

Des Weiteren kommt es bei einem Ausstoß von nicht verbrannten Brennstoff-Luft-Gemischen über die Abgasanlage (welche Abgasanlage zumeist hohe Temperaturen aufweist) zu Verpuffungen (oder auch als Fehlzündungen bezeichnet), welche zu erheblichen Lärmbelastungen, Beschädigungen und unerwünschten Emissionen führen können.

Weitere aus dem Stand der Technik bekannte Verfahren gehen beispielweise aus der WO 2017/051156 A1, der US 2012/175876 A1 oder der EP 2 433 355 B2 hervor.

Aufgabe der vorliegenden Erfindung ist es daher, ein Verfahren zum Synchronisieren eines Generators mit einem Stromversorgungsnetz bereitzustellen, welches die zuvor genannten Nachteile des Standes der Technik zumindest teilweise verbessert und/oder eine Synchronisationszeit zwischen Generator und Stromversorgungsnetz verkürzt und/oder die Emissionen während der Synchronisation verringert und/oder ein Ressourcenschonenderes Verfahren für die Synchronisation bereitstellt.

Erfindungsgemäß wird dies durch ein Verfahren zum Synchronisieren eines Generators mit einem eine Netzfrequenz aufweisenden Stromversorgungsnetz gemäß den Merkmalen des Anspruchs 1, einem Verbrennungsmotor mit den Merkmalen des Anspruchs 9, einem Computerprogrammprodukt mit den Merkmalen des Anspruchs 10 und einem computerlesbaren Speichermedium mit einem solchen Computerprogrammprodukt erreicht.

Erfindungsgemäß ist vorgesehen, dass ein Verfahren zum Synchronisieren eines Generators mit einem eine Netzfrequenz aufweisenden Stromversorgungsnetz folgende Schritte umfasst:

a) Mechanisches Antreiben des Generators mittels eines Verbrennungsmotors, insbesondere einem Gasmotor, unter Erzeugung einer Generatordrehzahl, die einer bei der vorliegenden Generatordrehzahl vom Generator erzeugten Generatorfrequenz entspricht,

b) Regeln oder Steuern des Verbrennungsmotors so, dass die Generatorfrequenz in einem Toleranzbereich liegt, wobei die Frequenz innerhalb des Toleranzbereichs liegt,

c) Detektieren einer Phasenwinkeldifferenz zwischen einem vom Generator erzeugten Strom und/oder einer vom Generator erzeugten Spannung einerseits und einem Netzstrom und/oder einer Netzspannung andererseits,

d) Synchronisieren der vom Generator erzeugten Spannung und/oder des vom Generator erzeugten Stroms einerseits mit der Netzspannung und/oder dem Netzstrom andererseits, indem die Phasenwinkeldifferenz verringert, insbesondere minimiert, wird,

e) Elektrisches Verbinden des Generators mit dem Stromversorgungsnetz

wobei das Verringern der Phasenwinkeldifferenz durch zumindest eine temporäre Änderung eines Zündzeitpunktes von zumindest einer Zylindereinheit des Verbrennungsmotors erreicht wird.

Durch das erfindungsgemäße, temporäre Ändern des Zündzeitpunktes zumindest einer Zylindereinheit des Verbrennungsmotors kann eine Leistung oder eine Verbrennungsmotordrehzahl über sehr kurze Zeiträume mit hoher Präzision verändert werden, sodass sich die Phasenwinkeldifferenz reduzieren lässt, ohne die Drehzahl so weit zu ändern, dass die Generatorfrequenz den Toleranzbereich verlassen würde. Dennoch kann gleichzeitig eine vollständige Verbrennung in der zumindest einen Zylindereinheit des zugeführten Brennstoff-Luft-Gemisches stattfinden, wodurch es zu keinen signifikanten Erhöhungen der ausgestoßenen Emissionen des Verbrennungsmotors kommt.

Natürlich kann es im Rahmen der Erfindung trotzdem zusätzlich vorgesehen sein, ein Verändern des Zündzeitpunkts zu verwenden, um auch eine Drehzahl des Verbrennungsmotors anzupassen.

Des Weiteren wird vermieden, dass es zu Fehlzündungen oder Verpuffungen im Abgastrakt des Verbrennungsmotors kommt, da die unverbrannten Brennstoff-Luft-Gemische nicht mehr bis in diesen gelangen.

Durch das vorübergehende - vorzugsweise intermittierende - Verstellen des Zündzeitpunktes kann dennoch eine sehr schnelle und unkomplizierte Änderung der Phasenwinkeldifferenz vorgenommen werden, was eine sehr schnelle Synchronisation zwischen Generator und Stromversorgungsnetz zulässt, um den Generator elektrisch mit dem Stromversorgungsnetz zu verbinden.

Vor allem bei der Anwendung stationärer Verbrennungsmotoren zur elektrischen Energieerzeugung und Einspeisung in ein Stromversorgungsnetz hat dies den signifikanten Vorteil, dass diese stationären Verbrennungsmotoren sehr schnell hochgefahren werden können und an das Stromversorgungsnetz angekoppelt werden können, um plötzlich auftauchende Instabilitäten im Stromversorgungsnetz (beispielsweise verursacht durch das Einbrechen einer Energieversorgung durch eine alternative Energiequelle - Photovoltaikanlage) stabilisieren zu können, um mögliche Stromversorgungsnetz-Zusammenbrüche vermeiden zu können.

Vor allem im Hinblick auf die zunehmende Zahl an alternativen Energiequellen wird es immer mehr erforderlich (da alternative Energiequellen, wie beispielsweise Photovoltaikanlagen, massive Energieschwankungen in einem Stromversorgungsnetz erzeugen können, indem die Sonne durch Bewölkung verdeckt wird) Stabilisierungsmaßnahmen für ein Stromversorgungsnetz zu treffen.

Um diese Schwankungen im Stromversorgungsnetz stabilisieren zu können und einen möglichen Netzeinbruch des Stromversorgungsnetzes verhindern zu können, ist es erforderlich, diese Einbrüche der alternativen Energiequellen durch Alternativen kurzzeitig und kurzfristig ersetzen zu können, wodurch es von hoher Priorität ist, entsprechende Energiequellen möglichst rasch an ein Stromversorgungsnetz anbinden zu können, wie es durch die vorliegende Erfindung bei dennoch annehmbaren Konditionen hinsichtlich Emissionen, Energieaufwand und Umwelt erlaubt wird.

Entsprechende elektrische Energieversorgungssysteme werden auch als Gensets bezeichnet, wobei ein stationärer Verbrennungsmotor - vorzugsweise ein Gasmotor - einen Generator antreibt, welcher elektrisch mit einem Stromversorgungsnetz verbindbar ist.

Ein erfindungsgemäßes Verfahren kann auch seinen Einsatz in bereits bekannten Ausführungsvarianten des Standes der Technik, wie beispielsweise in der Beschreibungseinleitung beschrieben, finden und nachträglich installiert werden.

In einer besonders bevorzugten Ausführungsform der Erfindung kann die Reduzierung der Phasenwinkeldifferenz primär ausschließlich durch die erfindungsgemäße temporäre Änderung des Zündzeitpunktes zumindest einer Zylindereinheit des Verbrennungsmotors erreicht werden. Sekundäre Änderungen zum Beibehalten der Drehzahl im Toleranzbereich (beispielsweise leichtes Öffnen der Drosselklappe) sind natürlich gegebenenfalls trotzdem durchzuführen.

Die temporäre Änderung des Zündzeitpunktes kann für alle Zylinder des Verbrennungsmotors, für einzelne Zylinder oder für Gruppen von Zylindern erfolgen. Besonders bevorzugt ist vorgesehen, dass die temporäre Änderung des Zündzeitpunktes für alle Zylinder des Verbrennungsmotors vorgenommen wird.

Zum Verbinden des Generotors mit dem Stromversorgungsnetz kann es vorgesehen sein, dass ein Verbindungskriterium erfüllt sein muss. Ein solche Verbindungskriterium kann beispielsweise ein Vorliegen der Generatordrehzahl innerhalb eines vorgebaren Toleranzbereichs und der Phasenwinkeldifferenz in einem vorgebbaren weiteren Toleranzbereich umfassen.

Unter einem Stromversorgungsnetzt kann ein öffentliches elektrisches Nah- oder Fernversorgungsnetz verstanden werden aber auch Anwendungen, bei welchen durch einen oder wenige Erzeuger eine Energieversorgung für einen oder wenige Abnehmer eine Stromversorgung gebildet wird (dies wird oft auch als Inselnetz bezeichnet).

Vorteilhafte Ausführungsformen der Erfindung sind anhand der abhängigen Ansprüche definiert.

Vorzugsweise kann vorgesehen sein, dass die zumindest eine temporäre Änderung des Zündzeitpunktes ($t_{temp}$) gemäß einer Schaltvorschrift (S) erfolgt, wobei die Schaltvorschrift (S) eine Funktion

$$S = f(\Delta n_{g_{soll}}, \Delta\varphi)$$

einer Abweichung zur Soll-Generatordrehzahl ($\Delta n_{g_{soll}}$) und der Phasenwinkeldifferenz ($\Delta\varphi$) ist.

Es kann beispielsweise vorgesehen sein, dass die Schaltvorschrift (S) erfüllt ist (S=0), wenn die Drehzahl in dem vorgebbaren Toleranzbereich und die Phasenwinkeldifferenz in einem weiteren vorgebbaren Toleranzbereich liegt.

Es kann vorgesehen sein, dass die temporäre Änderung des Zündzeitpunktes bei der Bedingung **S > ε** erfolgt, wobei $S = \varepsilon$ falls $\Delta n_{g_{soll}} = \Delta\varphi = 0$. $\varepsilon$ kann beispielsweise zu Null (=0) gewählt werden.

Das heißt es kann vorgesehen sein, dass die temporäre Änderung des Zündzeitpunktes bei der Bedingung *S > 0* erfolgt, wobei besonders bevorzugt bei **S > 0** der Zündzeitpunkt nach spät oder früh verstellt wird, um die Drehzahl des Verbrennungsmotors zu senken und/oder es kann vorgesehen sein, dass eine temporäre Änderung des Zündzeitpunktes bei der Bedingung **S < 0** zum nominellen Zündzeitpunkt zurückgestellt wird, um die Drehzahl des Verbrennungsmotors anzuheben.

Es ist vorgesehen, dass die temporäre Änderung des Zündzeitpunktes relativ zu einem vorgebbaren nominellen Zündzeitpunkt geschieht.

Es ist vorgesehen, dass der Zündzeitpunkt relativ zum vorgebbaren, nominellen Zündzeitpunkt temporär geändert wird. Das heißt es kann vorgesehen sein, dass der nominelle Zündzeitpunkt temporär auf "spät" oder "früh" gestellt wird. Vorzugsweise ist vorgesehen, dass im Schritt d) vom nominellen Zündzeitpunkt zum späterliegenden oder frühliegenden geänderten Zündzeitpunkt geschaltet wird und umgekehrt.

Das heißt, es kann vorgesehen sein, dass der Zündzeitpunkt für einen kurzen Zeitraum auf spät oder früh geschaltet wird und dann wieder auf den nominellen Zündzeitpunkt geschaltet wird, um die Phasenwinkeldifferenz minutiös anzupassen. Dieses Vorgehen kann so oft wiederholt werden, bis der Phasenwinkeldifferenz akzeptabel reduziert - insbesondere minimiert - ist. Anders formuliert, kann der Zündzeitpunkt intermittierend vom nominellen Zündzeitpunkt auf den geänderten Zündzeitpunkt geändert werden.

Es kann vorgesehen sein, dass der Zündzeitpunkt sprunghaft um 15 bis 20° Kurbelwinkel (auch °CA) geändert wird.

Abhängig vom Drehzahl- und Phasenwinkelverhalten kann dieser Zustand (Änderung des Zündzeitpunktes) bis zu ~2 s gehalten werden.

Sind die Drehzahl und Phasenwinkeldifferenz in einem Bereich, der eine Synchronisierung erlauben würde, wird der Zündzeitpunkt ständig sprunghaft verändert (entweder nomineller Zündzeitpunkt oder geänderter Zündzeitpunkt), wobei ein Schaltzustand für gewöhnlich für weniger als 0,2 s gehalten wird, bevor er wieder umgeschaltet wird (zum nominellen Zündzeitpunkt $t_{nom}$).

Dadurch kann die Drehzahl und Phasenwinkeldifferenz im Synchronisationsfenster gehalten werden bis der Generatorschalter schließt. Gewöhnlich kann dieser gesamte Vorgang des Synchronisierens (von der Aktivierung des Reglers) 2 bis 3 s andauern - das heißt während dieser Zeit kann der Zündzeitpunkt ständig sprunghaft verändert werden. Bevorzugt kann der Vorgang maximal für 15 s aktiv sein.

Es kann vorgesehen sein, dass die temporäre Änderung des Zündzeitpunktes im Wesentlichen in diskreten Schritten erfolgt.

Es ist vorgesehen, dass eine Drosselklappe des Verbrennungsmotors, derart gesteuert oder geregelt wird, dass sich die Generatordrehzahl während des Schrittes d) erhöht, wenn der Zündzeitpunkt im Wesentlichen bei im vorgebbaren nominellen Zündzeitpunkt bleiben würde.

Vereinfacht ausgedrückt heißt das, dass die Drosselklappe kann beim Verringern der Phasenwinkeldifferenz leicht geöffnet werden.

Es kann vorgesehen sein, dass die temporäre Änderung des Zündzeitpunktes mit dem Verbinden des Generators mit dem Stromversorgungsnetz beendet wird.

Des Weiteren wird Schutz begehrt für einen Verbrennungsmotor, insbesondere einen Gasmotor, umfassend zumindest eine Zylindereinheit und eine Steuer- oder Regeleinheit, wobei die Steuer- oder Regeleinheit dazu ausgebildet ist, dass den Verbrennungsmotor gemäß einem erfindungsgemäßen Verfahren zu steuern und/oder regeln.

Bezüglich einem erfindungsgemäßen Computerprogrammprodukt zum Synchronisieren eines Generators mit einem eine Netzfrequenz aufweisenden Stromversorgungsnetz sind Befehle vorgesehen, die einen ausführenden Computer dazu veranlassen:

    a) einen Verbrennungsmotor, insbesondere einen Gasmotor, zum mechanischen Antreiben des Generators unter Erzeugung einer Generatordrehzahl anzusteuern, wobei die Generatordrehzahl einer bei der vorliegenden Generatordrehzahl vom Generator erzeugten Generatorfrequenz entspricht;

    b) den Verbrennungsmotor so zu regeln oder steuern, dass die Generatorfrequenz in einem Toleranzbereich liegt, wobei die Netzfrequenz innerhalb des Toleranzbereichs liegt;

    c) zumindest ein Detektionssignal entgegenzunehmen oder zu berechnen, welches Detektionssignal einer Phasenwinkeldifferenz zwischen einem vom Generator erzeugten Strom und/oder einer vom Generator erzeugten Spannung einerseits und einem Netzstrom und/oder einer Netzspannung andererseits entspricht;

d) den Verbrennungsmotor zum Synchronisieren der vom Generator erzeugten Spannung und/oder des vom Generator erzeugten Stroms einerseits mit der Netzspannung und/oder dem Netzstrom andererseits anzusteuern, indem die Phasenwinkeldifferenz ($\Delta\varphi$) verringert, insbesondere minimiert, wird;

e) ein Auslösesignal zum elektrischen Verbinden des Generators mit dem Stromversorgungsnetz auszugeben,

wobei die Befehle den Computer durch zumindest eine temporäre Änderung eines Zündzeitpunktes von zumindest einer Zylindereinheit des Verbrennungsmotors zum Verringern der Phasenwinkeldifferenz veranlassen.

Ebenfalls wird Schutz begehrt für ein computerlesbares Speichermedium mit einem erfindungsgemäßen Computerprogrammprodukt.

Weitere Einzelheiten, Vorteile und Details der vorliegenden Erfindung werden anhand der Figuren und der nachfolgenden Figurenbeschreibung beispielhaft erläutert. Dabei zeigt

Fig. 1        ein erstes Ausführungsbeispiel eines Gensets, und

Fig. 2a-2e    Messungen und Ansteuersignale aus der Durchführung eines Ausführungsbeispiels eines erfindungsgemäßen Verfahrens.

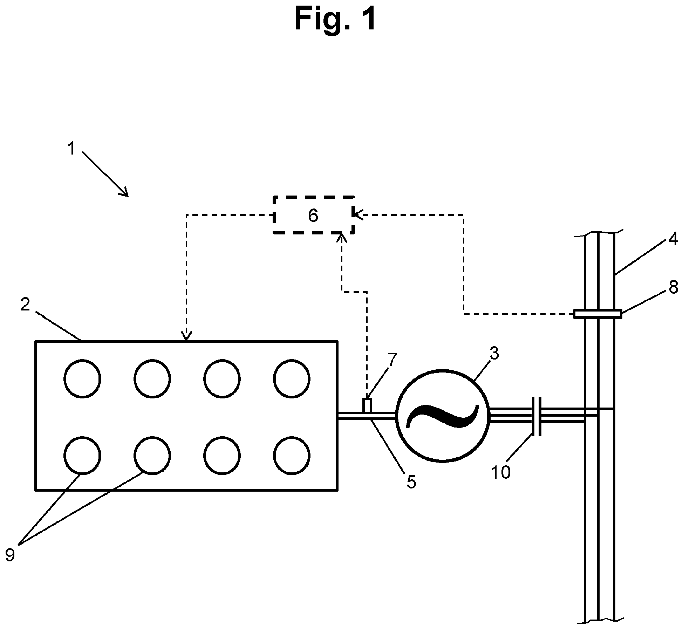

Fig. 1 zeigt ein erstes Ausführungsbeispiels eines Gensets 1.

Das Genset 1 umfasst einen Verbrennungsmotor 2, welcher über eine mechanische Welle 5 (beispielsweise kann diese auch als Verlängerung der Kurbelwelle des Verbrennungsmotors 2 umgesetzt sein) mit einem Generator 3 zur Stromerzeugung verbunden ist.

Zusätzlich könnte prinzipiell zwischen der Kurbelwelle des Verbrennungsmotors auch ein Getriebe vorhanden sein.

Der Verbrennungsmotor 2 verfügt in diesem Ausführungsbeispiel über mehrere Zylindereinheiten 9, wobei die Zylindereinheiten 9 über eine zentrale Steuer- oder Regeleinheit 6 während des Betriebs des Verbrennungsmotors 2 gesteuert oder geregelt werden können, indem beispielsweise die Zündung, die Kraftstoffzufuhr, die Luftzufuhr und/oder andere Parameter der Verbrennung durch entsprechende Ventile, Steuer- oder Regelorgane mithilfe der Steuer- oder Regeleinheit 6 gesteuert oder geregelt werden.

Der Generator 3 kann über eine elektrische Verbindung 10 mit einem Stromversorgungsnetz 4 verbunden werden, wobei die elektrische Verbindung 10 als Schalter ausgebildet sein kann, welcher die elektrischen Leitungen des Generators 3 mit dem Stromversorgungsnetz 4 verbindet.

Des Weiteren ist ein erster Sensor 7 vorgesehen, um einen charakteristischen Parameter für die erzeugte Spannung oder den erzeugten Strom des Generators 3 ermitteln zu können.

Mithilfe dieses charakteristischen Parameters der erzeugten Spannung oder des Stroms des Generators 3 kann über die Steuer- oder Regeleinheit 6 eine Frequenz der Spannung und/oder des Stroms des Generators 3 ermittelt werden.

Dieser erste Sensor 7 ist in diesem Ausführungsbeispiel als Drehzahlsensor an der Welle 5 ausgebildet, wobei die gemessene Drehzahl in diesem Ausführungsbeispiel der Generatordrehzahl des Generators 3 entspricht. Wäre ein Getriebe vorhanden, könnte die Generatordrehzahl auf Basis eines bekannten Übersetzungsverhältnisses zu ermitteln. Durch die bekannte Generatordrehzahl ist eine Frequenz des vom Generator 3 erzeugten Stroms und der Spannung des Generators 3 bekannt.

Des Weiteren ist in diesem Ausführungsbeispiel ein zweiter Sensor 8 gezeigt, mithilfe dessen eine Frequenz des Stromes und/oder der Spannung des Stromversorgungsnetzes 4 ermittelt werden kann und der Steuer- oder Regeleinheit 6 zugeführt werden kann.

Des Weiteren kann vorgesehen sein, dass die Steuer- oder Regeleinheit 6 mit der elektrischen Verbindung 10 verbunden ist, wobei durch die Steuer- oder Regeleinheit 6 die elektrische Verbindung 10 zwischen Generator 3 und Stromversorgungsnetz 4 erzeugt und/oder unterbrochen werden kann.

So kann über die Steuer- oder Regeleinheit 6 vorgesehen sein, dass bei Bedarf der Verbrennungsmotor 2 gestartet wird, um den Generator 3 anzutreiben.

Über die Steuer- oder Regeleinheit 6 kann nun die Drehzahl des Verbrennungsmotors 2 und damit die Generatorfrequenz so gesteuert oder geregelt werden, dass sich die Generatorfrequenz an die Netzfrequenz annähert, bis die Generatorfrequenz im Toleranzbereich 12 um die Netzfrequenz liegt.

Es ergibt sich dann eine Phasenwinkeldifferenz zwischen der Netzspannung und/oder dem Netzstrom einerseits und der Generatorspannung und/oder dem Generatorstrom andererseits. Um den Generator zum Liefern elektrischer Energie an das Stromversorgungsnetz 4 ankoppeln zu können, muss nun im Regelfall die Phasenwinkeldifferenz verringert, insbesondere minimiert, werden (was auch als Synchronisieren des Generators 3 mit dem Stromversorgungsnetz 4 bezeichnet wird).

Dies geschieht erfindungsgemäß durch Ändern des Zündzeitpunktes zumindest einer Zylindereinheit 9 des Verbrennungsmotors 2.

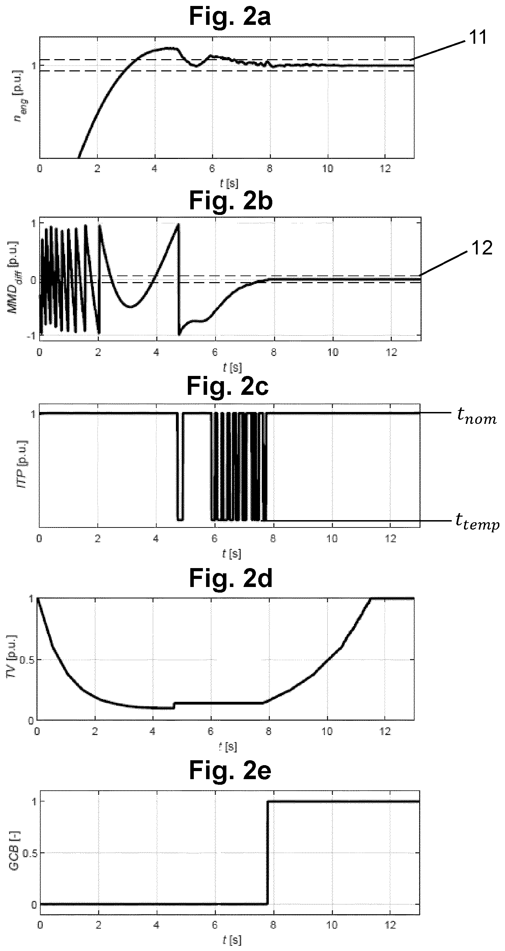

Messwerte und Ansteuersignale aus einem erfindungsgemäßen Verfahren zum Synchronisieren des Generators 3 mit dem Stromversorgungsnetz 4 sind durch die Figuren 2a bis 2e gezeigt, wobei (wie in Fig. 2a gezeigt ist) ein Verbrennungsmotor 2 mit einem gekoppelten Generator 3 aus dem Stillstand beschleunigt wird, bis eine gewünschte Generatordrehzahl erreicht wird.

Fig. 2a zeigt dabei das Verhalten der Generatordrehzahl entlang der Synchronisationszeit mit dem Stromversorgungsnetz 4.

Durch Fig. 2b ist eine Phasenwinkeldifferenz des Stroms und/oder der Spannung zwischen dem erzeugten Strom und/oder Spannung des Generators 3 und dem Strom und/oder der Spannung des Stromversorgungsnetzes 4 gezeigt.

Fig. 2c zeigt ein Steuersignal der Steuer- oder Regeleinheit 6 für den Zündzeitpunkt zumindest einer Zylindereinheit 9 des Verbrennungsmotors 2, also ein Steuersignal zum Bestimmen des Zündzeitpunkts. Dieser Zündzeitpunkt ist in dieser Figur im bezüglich eines Umdrehungswinkels der Kurbelwelle des Verbrennungsmotors 2 vor einem oberen Totpunkt (wie im Stand der Technik geläufig) angegeben.

Fig. 2d zeigt ein Steuer- oder Regelsignal der Steuer- oder Regeleinheit 6 bezüglich einer Drosselklappe des Verbrennungsmotors 2, wobei im Diagramm eine Öffnung der Drosselklappe zwischen "1" (voll geöffnet) und "0" (voll geschlossen) gezeigt ist.

Fig. 2e zeigt ein Steuer- oder Regelsignal der Steuer- oder Regeleinheit 6 für die elektrische Verbindung 10 des Generators 3 mit dem Stromversorgungsnetz 4, wobei zwischen einer geschlossenen Verbindung "1" (Steuersignal zur Schließung der elektrischen Verbindung 10) und einer geöffneten Verbindung "0" unterschieden wird. Wie zu erkennen ist, wird die Verbindung 10 des Generators 3 mit dem Stromversorgungsnetz 4 hergestellt, sobald die Phasenwinkeldifferenz in einem weiteren Toleranzbereich 12 für eine akzeptable Phasenwinkeldifferenz stabilisiert ist (Verbindungskriterium).

Diese Messwerte bzw. Ansteuersignale wurden gleichzeitig während des Ablaufes des Ausführungsbeispiels eines erfindungsgemäßen Verfahrens an einem Verbrennungsmotor 2 erhoben, wobei die Zeitskala der Figuren 2a bis 2e übereinstimmt.

So ist zu erkennen, dass zunächst der Verbrennungsmotor 2 bis zum Überschreiten einer gewünschten Generatordrehzahl angefahren wird, wobei zunächst das Drosselventil für ein möglichst schnelles Beschleunigen des Verbrennungsmotors 2 voll geöffnet wird.

Um die Beschleunigung langsam abzubremsen, wird die Drosselklappe kurz vor Erreichen der gewünschten Drehzahl geschlossen und die Beschleunigung reduziert und umgekehrt, um in den gewünschten Toleranzbereich 11 der Drehzahl (oder äquivalent der Generatorfrequenz) zu gelangen. Davor ist ein Pendeln der Phasenwinkeldifferenz (Fig. 2b) zu beobachten, was natürlich auf die nicht übereinstimmende Generatorfrequenz mit der Netzfrequenz zurückzuführen ist.

In Fig. 2c ist zu erkennen, dass ca. bei Sekunde 10 die Synchronisation beginnt, indem der nominelle Zündzeitpunkt $t_{nom}$ einer Zylindereinheit nach "spät" verschoben zu einem geänderter Zündzeitpunkt $t_{temp}$ wird und dies nach einem jedem Zyklus oder nach einer vorgebbaren Anzahl an Zyklen zurückgesetzt wird, um die Drehzahl der Brennkraftmaschine (wie Fig. 2a zeigt) und somit auch die

Generatordrehzahl in ein vorgegebenes Drehzahlband zu bringen, bei welchem eine Phasenwinkeldifferenz zwischen Stromversorgungsnetz 4 und Generator 3 minimiert (oder optimalerweise eliminiert) wird.

Weiters kann erkannt werden durch Fig. 2d, dass zu Beginn der Synchronisation die Drosselkappe leicht geöffnet wird. Diese Öffnung ermöglicht es die Drehzahl des Verbrennungsmotors 2 zu erhöhen, wenn der Zündzeitpunkt dem nominellen Zündzeitpunkt $t_{nom}$ entspricht und die Drehzahl zu senken, wenn der Zündzeitpunkt dem geänderten Zündzeitpunkt $t_{temp}$ entspricht. Dadurch kann ein besseres Anspruchsverhalten der Regelung während der Synchronisierung erreicht werden.

Sobald die Phasenwinkeldifferenz soweit minimiert wurde, dass sie einem Verbindungskriterium entspricht, wird durch die Steuer- oder Regeleinheit 6 der Generator 3 über die elektrische Verbindung 10 mit dem Stromversorgungsnetz 4 verbunden und durch die Steuer- oder Regeleinheit 6 kann in einem normalen Betriebsmodus für das Genset 1 gewechselt werden.

Das Verbindungskriterium umfasst beispielsweise, dass sich die Generatordrehzahl (siehe Fig. 2a) in einem vorgebbaren Toleranzbereich 11 befindet und dass sich die Phasenwinkeldifferenz (siehe Fig. 2a) in einem vorgebbaren weiteren Toleranzbereich 12 befindet.

Sodann wird nach verbinden des Generators 3 mit dem Stromversorgungsnetz 4 die Drosselklappe stetig geöffnet, um eine Leistung des Verbrennungsmotos 2 und damit die und das Energieversorgungsnetz 4 gelieferte Leistung zu erhöhen.

Bezugszeichenliste:

| | |
|---|---|
| 1 | Genset |
| 2 | Verbrennungsmotor |
| 3 | Generator |
| 4 | Stromversorgungsnetz |
| 5 | Welle |
| 6 | Steuer- oder Regeleinheit |
| 7 | erster Sensor |
| 8 | zweiter Sensor |
| 9 | Zylindereinheit |
| 10 | elektrische Verbindung |
| 11 | Toleranzbereich |
| 12 | Toleranzbereich |
| $t_{nom}$ | nomineller Zündzeitpunkt |
| $t_{temp}$ | geänderter Zündzeitpunkt |

**Patentansprüche**

1. Verfahren zum Synchronisieren eines Generators (3) mit einem eine Netzfrequenz aufweisenden Stromversorgungsnetz (4), umfassend folgende Schritte:

   a) Mechanisches Antreiben des Generators (3) mittels eines Verbrennungsmotors (2), insbesondere einem Gasmotor, unter Erzeugung einer Generatordrehzahl, die einer bei der vorliegenden Generatordrehzahl vom Generator (3) erzeugten Generatorfrequenz entspricht;
   b) Regeln oder Steuern des Verbrennungsmotors (2) so, dass die Generatorfrequenz in einem Toleranzbereich liegt, wobei die Netzfrequenz innerhalb des Toleranzbereichs liegt;
   c) Detektieren einer Phasenwinkeldifferenz zwischen einem vom Generator (3) erzeugten Strom und/oder einer vom Generator (3) erzeugten Spannung einerseits und einem Netzstrom und/oder einer Netzspannung andererseits;
   d) Synchronisieren der vom Generator (3) erzeugten Spannung und/oder des vom Generator (3) erzeugten Stroms einerseits mit der Netzspannung und/oder dem Netzstrom andererseits, indem die Phasenwinkeldifferenz ($\Delta\varphi$) verringert, insbesondere minimiert, wird;
   e) Elektrisches Verbinden des Generators (3) mit dem Stromversorgungsnetz (4);
   **dadurch gekennzeichnet, dass** zum Verringern der Phasenwinkeldifferenz ($\Delta\varphi$) zumindest eine temporäre Änderung eines Zündzeitpunktes zumindest einer Zylindereinheit (9) des Verbrennungsmotors (2) durchgeführt wird und die temporäre Änderung des Zündzeitpunktes relativ zu einem vorgebbaren nominellen Zündzeitpunkt ($t_{nom}$) geschieht,
   wobei eine Drosselklappe des Verbrennungsmotors (2), insbesondere Gasmotors, derart gesteuert und/oder geregelt wird, dass sich die Generatordrehzahl während des Schrittes d) erhöht, wenn der Zündzeitpunkt im Wesentlichen beim vorgebbaren nominellen Zündzeitpunkt ($t_{nom}$) bleiben würde.

2. Verfahren nach Anspruch 1, **dadurch gekennzeichnet, dass** die zumindest eine temporäre Änderung des Zündzeitpunktes gemäß einer Schaltvorschrift (S) erfolgt, wobei die Schaltvorschrift (S) eine Funktion

$$S = f(\Delta n_{g_{soll}}, \Delta\varphi)$$

einer Abweichung zur Soll-Generatordrehzahl ($\Delta n_{g_{soll}}$) und der Phasenwinkeldifferenz **($\Delta\varphi$)** ist.

3. Verfahren nach Anspruch 2, **dadurch gekennzeichnet, dass** die temporäre Änderung des Zündzeitpunktes bei der Bedingung **$S > \varepsilon$** erfolgt, wobei **$S$ = $\varepsilon$** falls $\Delta n_{g_{soll}} = \Delta\varphi = $ **0.**

4. Verfahren nach wenigstens einem der vorhergehenden Ansprüche, **dadurch gekennzeichnet, dass** ein gemäß der temporären Änderung des Zündzeitpunkts geänderter Zündzeitpunkt ($t_{temp}$) relativ zum vorgebbaren nominalen Zündzeitpunkt (**$t_{nom}$**) temporär geändert wird.

5. Verfahren nach wenigstens einem der vorhergehenden Ansprüche, **dadurch gekennzeichnet, dass** in Schritt d) - vorzugsweise intermittierend - vom nominellen Zündzeitpunkt (**$t_{nom}$**) zum geänderten Zündzeitpunkt (**$t_{temp}$**) geschalten wird und umgekehrt.

6. Verfahren nach wenigstens einem der vorhergehenden Ansprüche, **dadurch gekennzeichnet, dass** der nominelle Zündzeitpunkt (**$t_{nom}$**) dem Zündzeitpunkt in Schritt b) und oder c) entspricht.

7. Verfahren nach wenigstens einem der vorhergehenden Ansprüche, **dadurch gekennzeichnet, dass** die temporäre Änderung des Zündzeitpunktes im Wesentlichen in diskreten Schritten erfolgt.

8. Verfahren nach wenigstens einem der vorhergehenden Ansprüche, **dadurch gekennzeichnet, dass** die temporäre Änderung des Zündzeitpunktes mit dem Verbinden des Generators (3) mit dem Stromversorgungsnetz (4) beendet wird.

9. Verbrennungsmotor, insbesondere Gasmotor, umfassend zumindest eine Zylindereinheit und eine Steuer- und/oder Regeleinheit (6), wobei die Steuer- und/oder Regeleinheit (6) dazu ausgebildet ist, den Verbrennungsmotor (2) gemäß dem Verfahren nach wenigstens einem der vorhergehenden Ansprüche zu steuern oder zu regeln.

10. Computerprogrammprodukt zum Synchronisieren eines Generators (3) mit einem eine Netzfrequenz aufweisenden Stromversorgungsnetz (4) mit Befehlen, die eine ausführende Steuer- oder Regeleinheit (6) dazu veranlassen,

   a) einen Verbrennungsmotor (2), insbesondere einen Gasmotor, zum mechanischen Antreiben des Generators (3) unter Erzeugung einer Generatordrehzahl anzusteuern, wobei die Generatordrehzahl einer bei der vorliegenden Generatordrehzahl vom Generator (3) erzeugten Generatorfrequenz entspricht;
   b) den Verbrennungsmotor (2) so zu regeln oder steuern, dass die Generatorfrequenz in einem Toleranzbereich liegt, wobei die Netzfrequenz innerhalb des Toleranzbereichs liegt;

c) zumindest ein Detektionssignal entgegenzunehmen oder zu berechnen, welches Detektionssignal einer Phasenwinkeldifferenz zwischen einem vom Generator (3) erzeugten Strom und/oder einer vom Generator (3) erzeugten Spannung einerseits und einem Netzstrom und/oder einer Netzspannung andererseits entspricht;

d) den Verbrennungsmotor zum Synchronisieren der vom Generator (3) erzeugten Spannung und/oder des vom Generator (3) erzeugten Stroms einerseits mit der Netzspannung und/oder dem Netzstrom andererseits anzusteuern, indem die Phasenwinkeldifferenz ($\Delta\varphi$) verringert, insbesondere minimiert, wird;

e) ein Auslösesignal zum elektrischen Verbinden des Generators (3) mit dem Stromversorgungsnetz (4) auszugeben;

**dadurch gekennzeichnet, dass** die Befehle die Steuer- oder Regeleinheit (6) veranlassen, zumindest eine temporäre Änderung eines Zündzeitpunktes zumindest einer Zylindereinheit des Verbrennungsmotors (2) zum Verringern der Phasenwinkeldifferenz durchzuführen, wobei die temporäre Änderung des Zündzeitpunktes relativ zu einem vorgebbaren nominellen Zündzeitpunkt (**$t_{nom}$**) geschieht, wobei die Steuer- oder Regeleinheit (6) eine Drosselklappe des Verbrennungsmotors (2) derart steuert und/oder regelt, dass sich die Generatordrehzahl während des Schrittes d) erhöht, wenn der Zündzeitpunkt im Wesentlichen beim vorgebbaren nominellen Zündzeitpunkt (**$t_{nom}$**) bleiben würde.

**11.** Computerlesbares Speichermedium mit einem Computerprogrammprodukt nach Anspruch 10.

**Claims**

**1.** A method for synchronizing a generator (3) with a power supply grid (4) having a mains frequency, comprising the following steps:

a) mechanically driving the generator (3) by means of an internal combustion engine (2), in particular a gas engine, while generating a generator speed that corresponds to a generator frequency generated by the generator (3) at the present generator speed;

b) regulating or controlling the internal combustion engine (2) so that the generator frequency is within a tolerance range, wherein the mains frequency is within the tolerance range;

c) detecting a phase angle difference between a current generated by the generator (3) and/or a voltage generated by the generator (3) on the one hand and a mains current and/or mains voltage on the other hand;

d) synchronizing the voltage generated by the generator (3) and/or the current generated by the generator (3) on the one hand with the mains voltage and/or mains current on the other hand by reducing, in particular minimizing, the phase angle difference ($\Delta\varphi$);

e) electrically connecting the generator (3) to the power supply grid (4);

**characterized in that**
to reduce the phase angle difference ($\Delta\varphi$), at least a temporary change in the ignition timing of at least one cylinder unit (9) of the internal combustion engine (2) is carried out, and the temporary change in the ignition timing is relative to a predeterminable nominal ignition timing ($t_{nom}$), wherein a throttle valve of the internal combustion engine (2), in particular a gas engine, is controlled and/or regulated such that the generator speed increases during step d) if the ignition timing would remain essentially at the predeterminable nominal ignition timing (**$t_{nom}$**).

**2.** The method according to claim 1, **characterized in that** the at least one temporary change in the ignition timing is carried out according to a switching instruction (S), wherein the switching instruction (S) is a function

$$S = f\left(\Delta n_{g_{soll}}, \Delta\varphi\right)$$

of a deviation from the nominal generator speed (**$\Delta n_{g_{soll}}$**) and the phase angle difference ($\Delta\varphi$).

**3.** The method according to claim 2, **characterized in that** the temporary change in the ignition timing takes place under the condition $S > \varepsilon$, wherein $S = \varepsilon$ if $\Delta n_{g_{soll}} = \Delta\varphi = 0$.

**4.** The method according to at least one of the preceding claims, **characterized in that** an ignition timing ($t_{temp}$) changed according to the temporary change of the ignition timing is temporarily changed relative to the predeterminable nominal ignition timing(**$t_{nom}$**).

**5.** The method according to at least one of the preceding claims, **characterized in that** in step d) - preferably intermittently - switching is performed from the nominal ignition time ($t_{nom}$) to the changed ignition timing ($t_{temp}$) and vice versa.

**6.** The method according to at least one of the preceding claims, **characterized in that** the nominal ignition timing ($t_{nom}$) corresponds to the ignition timing in step b) and/or c).

7. The method according to at least one of the preceding claims, **characterized in that** the temporary change of the ignition timing is carried out essentially in discrete steps.

8. The method according to at least one of the preceding claims, **characterized in that** the temporary change in the ignition timing is terminated by connecting the generator (3) to the power supply grid (4).

9. An internal combustion engine, in particular gas engine, comprising at least one cylinder unit and a control and/or regulating unit (6), wherein the control and/or regulating unit (6) is configured to control or regulate the internal combustion engine (2) according to the method according to at least one of the preceding claims.

10. A computer program product for synchronizing a generator (3) with a mains frequency power supply grid (4) with commands that cause an executing control or regulating unit (6) to perform,

a) controlling an internal combustion engine (2), in particular a gas engine, for mechanically driving the generator (3) while generating a generator speed, wherein the generator speed corresponds to a generator frequency generated by the generator (3) at the present generator speed;
b) regulating or controlling the internal combustion engine (2) so that the generator frequency is within a tolerance range, wherein the mains frequency is within the tolerance range;
c) receiving or calculating a detection signal, which detection signal corresponds to a phase angle difference between a current generated by the generator (3) and/or a voltage generated by the generator (3) on the one hand and a mains current and/or mains voltage on the other hand;
d) controlling the internal combustion engine for synchronizing the voltage generated by the generator (3) and/or the current generated by the generator (3) on the one hand with the mains voltage and/or mains current on the other hand by reducing, in particular minimizing, the phase angle difference ($\Delta\varphi$);
e) outputting a trigger signal for electrically connecting the generator (3) to the power supply grid (4);

**characterized in that**
the commands cause the control or regulating unit (6) to perform at least at least a temporary change of an ignition timing of at least one cylinder unit of the internal combustion engine (2) to reduce the phase angle difference, wherein the temporary change in the ignition timing occurs relative to a predeterminable nominal ignition timing ($t_{nom}$), wherein the control or regulating unit (6) controls and/or regulates a throttle valve of the internal combustion engine (2), such that the generator speed increases during step d) if the ignition timing would remain essentially at the predeterminable nominal ignition timing ($t_{nom}$).

11. Computer-readable storage medium comprising a computer program product according to claim 10.

**Revendications**

1. Procédé de synchronisation d'un générateur (3) avec un réseau d'alimentation électrique (4) présentant une fréquence de réseau, comprenant les étapes suivantes :

a) l'entraînement mécanique du générateur (3) au moyen d'un moteur à combustion interne (2), en particulier d'un moteur à gaz, avec génération d'une vitesse de rotation de générateur qui correspond à une fréquence de générateur générée par le générateur (3) à la vitesse de rotation de générateur présente ;
b) la régulation ou commande du moteur à combustion interne (2) de sorte que la fréquence de générateur se situe dans une plage de tolérance, dans lequel la fréquence de réseau se situe à l'intérieur de la plage de tolérance ;
c) la détection d'une différence d'angle de phase entre un courant généré par le générateur (3) et/ou une tension générée par le générateur (3) d'une part et un courant de réseau et/ou une tension de réseau d'autre part ;
d) la synchronisation de la tension générée par le générateur (3) et/ou du courant généré par le générateur (3) d'une part avec la tension de réseau et/ou le courant de réseau d'autre part, en réduisant, en particulier en minimisant, la différence d'angle de phase ($\Delta\varphi$) ;
e) la connexion électrique du générateur (3) au réseau d'alimentation électrique (4) ;

**caractérisé en ce que**
pour réduire la différence d'angle de phase ($\Delta\varphi$), au moins une modification temporaire d'un moment d'allumage d'au moins une unité de cylindre (9) du moteur à combustion interne (2) est effectuée et la modification temporaire du moment d'allumage se produit par rapport à un moment d'allumage nominal ($t_{nom}$) pouvant être prédéfini, dans lequel un papillon du moteur à combustion interne (2), en particulier du moteur à gaz, est commandé et/ou régulé de sorte que la vitesse de rotation de générateur augmente pendant l'étape d), si le moment d'allumage restait sensiblement au moment d'allumage nominal ($t_{nom}$) pouvant être prédéfini.

2. Procédé selon la revendication 1, **caractérisé en ce que** l'au moins une modification temporaire du moment d'allumage s'effectue selon une prescription de commutation (S), dans lequel la prescription de commutation (S) est une fonction

$$S = f\left(\Delta n_{gsoll}, \Delta\varphi\right)$$

d'un écart par rapport à la vitesse de rotation de générateur de consigne ($\Delta n_{gsoll}$) et la différence d'angle de phase ($\Delta\varphi$).

3. Procédé selon la revendication 2, **caractérisé en ce que** la modification temporaire du moment d'allumage s'effectue à la condition S > ε, dans lequel S = ε si $\Delta n_{gsoll} = \Delta\varphi = 0$.

4. Procédé selon au moins l'une des revendications précédentes, **caractérisé en ce qu'**un moment d'allumage ($t_{temp}$) modifié conformément à la modification temporaire du moment d'allumage est modifié temporairement par rapport au moment d'allumage nominal ($t_{nom}$) pouvant être prédéfini.

5. Procédé selon au moins l'une des revendications précédentes, **caractérisé en ce qu'**à l'étape d), on commute - de préférence de manière intermittente - du moment d'allumage nominal ($t_{nom}$) au moment d'allumage modifié ($t_{temp}$) et inversement.

6. Procédé selon au moins l'une des revendications précédentes, **caractérisé en ce que** le moment d'allumage nominal ($t_{nom}$) correspond au moment d'allumage à l'étape b) et/ou c).

7. Procédé selon au moins l'une des revendications précédentes, **caractérisé en ce que** la modification temporaire du moment d'allumage s'effectue essentiellement par étapes discrètes.

8. Procédé selon au moins l'une des revendications précédentes, **caractérisé en ce que** la modification temporaire du moment d'allumage est terminée par la connexion du générateur (3) au réseau d'alimentation électrique (4).

9. Moteur à combustion interne, en particulier moteur à gaz, comprenant au moins une unité de cylindre et une unité de commande et/ou de régulation (6), dans lequel l'unité de commande et/ou de régulation (6) est réalisée pour commander ou pour réguler le moteur à combustion interne (2) selon le procédé selon au moins l'une des revendications précédentes.

10. Produit programme d'ordinateur pour synchroniser un générateur (3) avec un réseau d'alimentation électrique (4) présentant une fréquence de réseau avec des instructions qui amènent une unité de commande ou de régulation (6) exécutante à

    a) commander un moteur à combustion interne (2), en particulier un moteur à gaz, pour entraîner mécaniquement le générateur (3) avec génération d'une vitesse de rotation de générateur, dans lequel la vitesse de rotation de générateur correspond à une fréquence de générateur générée par le générateur (3) à la vitesse de rotation de générateur présente ;
    b) réguler ou commander le moteur à combustion interne (2) de sorte que la fréquence de générateur se situe dans une plage de tolérance, dans lequel la fréquence de réseau se situe à l'intérieur de la plage de tolérance ;
    c) recevoir ou calculer au moins un signal de détection, lequel signal de détection correspond à une différence d'angle de phase entre un courant généré par le générateur (3) et/ou une tension générée par le générateur (3) d'une part et un courant de réseau et/ou une tension de réseau d'autre part ;
    d) commander le moteur à combustion interne pour synchroniser la tension générée par le générateur (3) et/ou le courant généré par le générateur (3) d'une part avec la tension de réseau et/ou le courant de réseau d'autre part, en réduisant, en particulier en minimisant, la différence d'angle de phase ($\Delta\varphi$) ;
    e) émettre un signal de déclenchement pour connecter électriquement le générateur (3) au réseau d'alimentation électrique (4) ;
    **caractérisé en ce que** les instructions amènent l'unité de commande ou de régulation (6) à effectuer au moins une modification temporaire d'un moment d'allumage d'au moins une unité de cylindre du moteur à combustion interne (2) pour réduire la différence d'angle de phase, dans lequel la modification temporaire du moment d'allumage s'effectue par rapport à un moment d'allumage nominal ($t_{nom}$) pouvant être prédéfini,
    dans lequel l'unité de commande ou de régulation (6) commande et/ou régule un papillon du moteur à combustion interne (2), de sorte que la vitesse de rotation de générateur augmente pendant l'étape d) si le moment d'allumage restait sensiblement au moment d'allumage nominal ($t_{nom}$) pouvant être prédéfini.

11. Support de stockage lisible par ordinateur avec un produit programme d'ordinateur selon la revendica-

**EP 4 056 832 B1**

tion 10.

# Fig. 2a

# Fig. 2b

# Fig. 2c

# Fig. 2d

# Fig. 2e

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2651000 A2
- EP 3561988 A1
- WO 2017051156 A1
- US 2012175876 A1
- EP 2433355 B2